# EUROPÄISCHE PATENTSCHRIFT

(11) **EP 2 285 614 B1**
(45) Veröffentlichungstag und Bekanntmachung des Hinweises auf die Patenterteilung: **28.12.2011**
(21) Anmeldenummer: 09765730.8
(22) Anmeldetag: 27.05.2009
(51) Int. Cl.: B60K 6/485, H02K 7/08, H02K 7/116

(54) **Vorrichtung zur Erzeugung und Übertragung eines Antriebsdrehmoments**
Device for generating and transmitting a drive torque
Dispositif de génération et de transmission d'un moment d'entraînement

(30) Priorität: 16.06.2008 DE 102008002441
(43) Veröffentlichungstag der Anmeldung: 23.02.2011
(73) Patentinhaber: ZF Friedrichshafen AG, 88038 Friedrichshafen (DE)
(72) Erfinder: HOFFMANN, Rayk, 88048 Friedrichshafen (DE); SCHELL, Oliver, 88212 Ravensburg (DE); LAMKE, Martin, 88213 Ravensburg (DE)
(86) Internationale Anmeldenummer: PCT/EP2009/056456
(87) Internationale Veröffentlichungsnummer: WO 2009/153150

(56) Entgegenhaltungen:
- EP-A- 1 657 094
- FR-A- 2 881 380
- US-A1- 2004 045 752
- US-A1- 2008 093 135

## Beschreibung

Die Erfindung bezieht sich auf eine Vorrichtung für einen Fahrzeugantriebsstrang zur Erzeugung und Übertragung eines Antriebsdrehmoments auf Bauteile des Antriebsstrangs gemäß den Merkmalen des Oberbegriffes des Patentanspruchs 1.

Derartige Vorrichtungen werden genutzt, um in einem Fahrzeugantriebsstrang ein Antriebsdrehmoment beziehungsweise eine Antriebsleistung eines elektrischen Antriebsmotors und gegebenenfalls eines zweiten Antriebsmotors auf Bauteile des Fahrzeugantriebsstrangs, beispielsweise ein Hauptgetriebe oder ein Verteilergetriebe, zu übertragen. Hierzu kann der zweite Antriebsmotor im Sinne eines parallelen Hybridantriebsstrangs mechanisch mit der Vorrichtung gekoppelt sein und gemeinsam mit dem elektrischen Antriebsmotor die Bauteile des Antriebsstrangs antreiben, oder der zweite Antriebsmotor kann im Sinne eines seriellen Hybridantriebsstrangs mit einem Generator verbunden sein, welcher elektrisch mit dem elektrischen Antriebsmotor in Verbindung steht, der alleine die Bauteile des Antriebsstrangs antreibt. In beiden Antriebsstrangvarianten ist es in der Regel vorgesehen, den elektrischen Antriebsmotor an einen wiederaufladbaren Energiespeicher anzubinden und bedarfsweise entweder generatorisch zu betreiben, um den Energiespeicher zu befüllen, oder motorisch zu betreiben, um unter Leerung des Energiespeichers die Bauteile des Antriebsstrang anzutreiben.

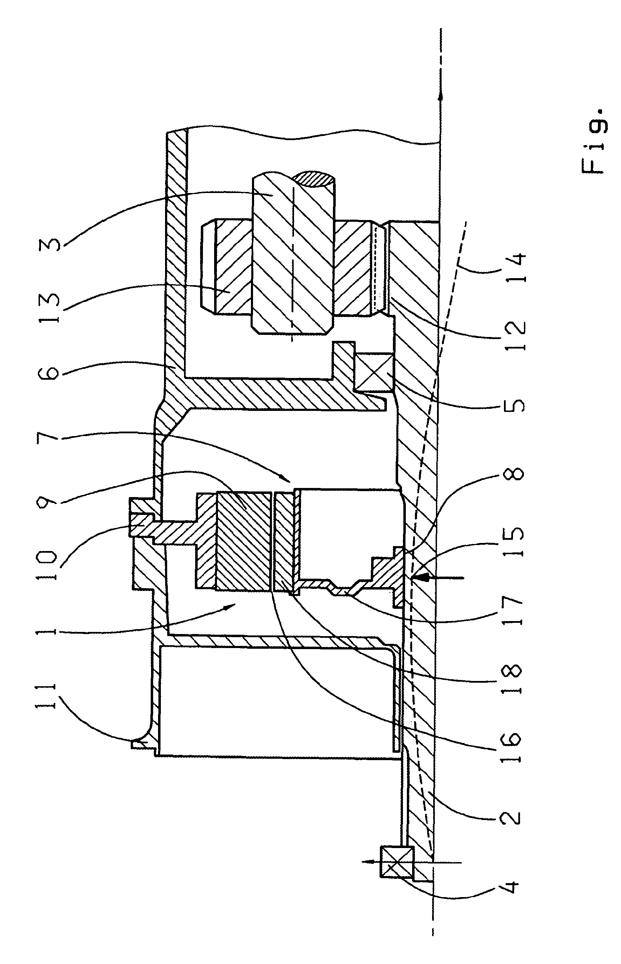

Die Fig. 1 der DE 100 33 424 A1 und die Beschreibung hierzu offenbaren eine Vorrichtung für einen Fahrzeugantriebsstrang zur Erzeugung und Übertragung eines Antriebsdrehmoments auf Bauteile des Antriebsstrangs mit einer Welle, hier einer Getriebeeingangswelle, deren Antriebsseite über eine Kupplung mit einem Antriebsmotor in Wirkverbindung bringbar ist und deren Abtriebsseite mit weiteren Bauteilen des Antriebsstrangs, hier einem Getriebe, in Wirkverbindung steht. Die Vorrichtung umfasst des Weiteren eine erste und eine zweite Lagerung, welche die Welle drehbar in einem Gehäuse abstützen und einen zwischen der ersten und der zweiten Lagerung angeordneten elektrischen Antriebsmotor, bestehend aus einem ortsfesten Stator und einem drehfest mit der Welle gekoppelten Rotor. Die drehfeste Koppelung des Rotors mit der Welle wird dabei über ein Zahnradprofil der Welle erzeugt, an welchem der Rotor mit mehreren Auflageflächen anliegt.

Bei einer derartigen Vorrichtung kann es durch eine Übertragung des Antriebsdrehmoments von der Welle auf die Bauteile des Antriebsstrangs zu einer Einleitung von senkrecht zur Längsrichtung der Welle wirkenden Querkräften in die Welle kommen, beispielsweise wenn die Welle über ein Zahnrad mit einer Vorgelegewelle eines Getriebes gekoppelt ist und der elektrische Antriebsmotor im Betrieb ein Antriebsdrehmoment in die Welle einleitet. Diese Querkräfte, deren Stärke unter anderem von dem übertragenen Antriebsdrehmoment und der Verschaltung des Getriebes abhängt, bewirken eine Biegung der Welle und somit eine Änderung der Ausrichtung des Rotors gegenüber dem Stator in Lage und Winkel. Insbesondere die Verkippung des Rotors gegenüber dem Stator auf Grund des Biegewinkels im Bereich der Auflagefläche des Rotors hat einen negativen Einfluss auf die Leistungsfähigkeit des elektrischen Antriebsmotors, da die im Betrieb des elektrischen Antriebsmotors erzeugten elektrischen Felder nicht mehr konstant in einem vorgesehenen günstigen Winkel in den Rotor und den Stator eintreten. Zudem kann es bei einer großen länglichen Abmessung des Rotors durch die Verkippung zu einer Kollision des Rotors mit dem Stator kommen, in deren Folge der elektrische Antriebsmotor zerstört werden kann.

Aufgabe der Erfindung ist es daher eine Vorrichtung der genannten Art zu schaffen, deren elektrischer Antriebsmotor im Betrieb eine gleichbleibende Leistungsfähigkeit aufweist. Des weiteren soll die Möglichkeit einer Kollision des Rotors mit dem Stator verringert werden.

Diese Aufgabe wird durch eine Vorrichtung mit den Merkmalen des Patentanspruchs 1 gelöst. Hiernach umfasst eine Vorrichtung für einen Fahrzeugantriebsstrang zur Erzeugung und Übertragung eines Antriebsdrehmoments auf Bauteile des Antriebsstrangs eine ein- oder mehrteilige Welle, welche mit einer Abtriebsseite mit den Bauteilen des Antriebsstrangs in Wirkverbindung steht, mindestens eine erste und eine zweite Lagerung, welche die Welle drehbar abstützen und einen elektrischen Antriebsmotor, der zumindest einen Teil des übertragenen Antriebsdrehmoments erzeugen kann und aus mindestens einem ortsfesten Stator und einem drehfest mit der Welle verbundenen Rotor besteht, wobei der Rotor mit mindestens einer Auflagefläche an der Welle anliegt. Erfindungsgemäß umfasst die Vorrichtung an der Welle angeordnete Mittel, durch welche das Antriebsdrehmoment unter Einleitung mindestens einer Querkraft in die Welle auf die Bauteile des Antriebsstrangs übertragbar ist, wobei der Rotor derart auf der Welle positioniert ist, dass sich die Auflagefläche im Bereich eines Maximums einer durch die Querkraft in der Welle hervorgerufenen Biegung befindet.

Grundgedanke der Erfindung ist, dass der Biegewinkel der Wellle im Bereich eines Maximums der Biegung sehr klein ist und in unmittelbarer Nähe zu dem Maximum gegen null geht. Zwar ändert sich bei einer Positionierung des Rotors im Sinne der Erfindung weiterhin die Lage des Rotors gegenüber dem Stator, die Verkippung des Rotors ist durch den dortigen geringen Biegewinkel jedoch deutlich reduziert, im Idealfall tritt sogar keine Verkippung des Rotors auf. Die im Betrieb des elektrischen Antriebsmotors erzeugten elektrischen Felder können somit nahezu konstant in dem vorgesehenen günstigen Winkel in den Stator und den Rotor eintreten, wodurch keine oder lediglich eine vernachlässigbar kleine Änderung der Leistungsfähigkeit des Antriebsmotors auftritt. Zudem ist eine Kollision des Rotors mit dem Stator infolge der Verkippung ausgeschlossen. Die Veränderung der Lage des Rotors gegenüber dem Stator wird dabei durch den zwischen dem Rotor und dem Stator befindlichen Luftspalt kompensiert.

In einer ersten Weiterbildung der Erfindung ist der Rotor derart auf der Welle positioniert, dass sich ein Maximum der Biegung auf halber Länge einer Ausdehnung der Auflagefläche in Längsrichtung der Welle befindet. Dies bedeutet, dass sich die in Längsrichtung der Welle befindliche Mitte der Auflagefläche auf dem Maximum der Biegung befindet. Da die Biegung der Welle im Bereich eines Maximums zumindest annähernd symmetrisch ist, kann somit eine Verkippung des Rotors in einer ersten Hälfte der Auflagefläche durch eine Verkippung des Rotors in einer zweiten Hälfte der Auflagefläche zumindest größtenteils ausgeglichen werden, wodurch der gesamte Rotor keine oder lediglich eine unwesentlich geringe Verkippung erfährt.

In einer bevorzugten Weiterbildung der Erfindung sind die Mittel zur Übertragung des Antriebsdrehmoments im Bereich eines Endes der Welle angeordnet und umfassen mindestens ein mit der Welle verbundenes oder lösbar verbindbares Zahnrad, wobei die erste Lagerung im Bereich eines anderen Endes der Welle angeordnet ist und die zweite Lagerung zwischen den Mitteln und der ersten Lagerung angeordnet ist. Das Zahnrad steht vorzugsweise mit einem weiteren Zahnrad eines Fahrzeughauptgetriebes im Eingriff, auf welches ein an der Welle anliegendes Antriebsdrehmoment unter Einleitung einer Querkraft in die Welle übertragen wird. Das Hauptgetriebe ist dabei bevorzugt ein Getriebe mit mindestens einer Vorgelegewelle, beispielsweise ein Doppelkupplungsgetriebe oder ein automatisiertes Schaltgetriebe. Die Welle ist daher bevorzugt eine Getriebeeingangswelle, welche über die erste Lagerung gegen eine Motorausgangswelle, beispielsweise eine Kurbelwelle, eines zweiten Antriebsmotors drehbar abgestützt ist und welche über die zweite Lagerung gegen ein Gehäuse, beispielsweise ein Gehäuse des Hauptgetriebes, drehbar abgestützt ist, wobei dann die Motorausgangswelle über eine Kupplung, beispielsweise eine reibschlüssige Anfahrkupplung, mit der Welle lösbar verbindbar ist.

In einer weiteren Weiterbildung der Erfindung ist die Welle, bevorzugt eine Getriebeeingangswelle, über die erste Lagerung auf ein Zwischengehäuse, bevorzugt eine Kupplungsglocke, drehbar abgestützt und über die zweite Lagerung gegen ein Getriebegehäuse drehbar abgestützt, wobei eine dritte Lagerung vorgesehen ist, die die Welle gegen eine Motorausgangswelle, bevorzugt eine Kurbelwelle, eines zweiten Antriebsmotors drehbar abstützt. Die Motorausgangswelle ist hierbei über eine Kupplung, bevorzugt eine reibschlüssige Anfahrkupplung, mit der Welle lösbar verbindbar. Durch die drei- oder mehrfache Abstützung der Welle wird deren Biegung deutlich reduziert, wobei durch die Anordnung des Rotors im Bereich eines Maximums der Biegung die Verkippung des Rotors reduziert wird. Somit kann bei einer Übertragung des Antriebsdrehmoments auf die Bauteile des Antriebsstrangs sowohl die Änderung der Lage des Rotors gegenüber dem Stator, als auch die Verkippung des Rotors vermindert werden. Da sich hierdurch sowohl der Winkel als auch die Lage des Rotors gegenüber dem Stator bei der Drehmomentübertragung nur unwesentlich ändern, können die Abmessungen des Rotors und des Stators gut aufeinander abgestimmt werden, wodurch die Leistungsfähigkeit des elektrischen Antriebsmotors gesteigert werden kann. Zudem verbessern sich die Notlaufeigenschaften der Vorrichtung, da im Falle eines Ausfalls einer der Lagerungen, die verbleibenden intakten Lagerungen zumindest kurzzeitig die ausgefallene Lagerung ersetzen können.

In einer besonders bevorzugten Weiterbildungen der Erfindung ist der Stator ortsfest mit einem Statorgehäuse gekoppelt, welches zwischen einem Zwischengehäuse, bevorzugt einer Kupplungsglocke, und einem Getriebegehäuse angeordnet ist, wodurch die Montage der Vorrichtung und dabei insbesondere der Einbau des Stators erleichtert werden kann.

Als Lagerungen können alle bekannten Lagerungsarten eingesetzt werden. Insbesondere Wälz- oder Gleitlager sind auf Grund ihrer hohen Verfügbarkeit und ihrer niedrigen Kosten gut geeignet. Die Lagerungen können dabei selbst- oder fremdgeschmiert sein.

Die Verbindung des Rotors mit der Welle kann über bekannte WellenNaben-Verbindungen erfolgen, beispielsweise über Keil- oder Evolventenverzahnungen oder über eine zylindrische oder kegelige Passverbindung. Dabei liegt zwischen der Auflagefläche des Rotors und der Welle bevorzugt eine Presspassung vor, um den Rotor steif mit der Welle zu verbinden und um Korrosion, insbesondere Passungsrost, zwischen der Auflagefläche und der Welle zu verhindern.

Zum einfacheren Einbau der Vorrichtung in einen Fahrzeugantriebsstrang oder zur einfacheren Montage der Vorrichtung, kann die Welle mehrteilig ausgeführt sein, wozu mehreren Wellensegmenten, beispielsweise über komplementär ausgeführte Polygonprofile oder über Flanschverbindungen, drehfest miteinander verbundenen sind.

Im Folgenden wird die Erfindung anhand einer Zeichnung näher erläutert, aus welcher weitere vorteilhafte Ausgestaltungen entnommen werden können. Die Figur zeigt in schematischer Darstellung eine geschnittene Hälfte der Vorrichtung in einem Einbauzustand. Zudem zeigt die Figur den Verlauf der Biegung der Welle entlang deren Längsachse, wobei der Ort der maximalen Biegung durch einen Pfeil gekennzeichnet ist.

Die mit dem elektrischen Antriebsmotors 1 verbundene einteilige Welle 2 bildet in der dargestellten Ausgestaltung der Erfindung eine Getriebeeingangswelle eines Fahrzeughauptgetriebes und steht antriebsseitig mit einem nicht dargestellten Verbrennungsmotors als einem zweiten Antriebsmotor in einer lösbaren Wirkverbindung und abtriebsseitig mit einer Vorgelegewelle 3 eines Fahrzeughauptgetriebes in Wirkverbindung. Dabei ist die Welle 2 über die erste Lagerung 4 in einer nicht dargestellten Motorausgangswelle drehbar abgestützt und über die zweite Lagerung 5 in einem Getriebegehäuse 6 drehbar abgestützt. Der Rotor 7 des elektrischen Antriebsmotors 1 ist über die Auflagefläche 8 mit der Welle 2 drehfest gekoppelt und auf dieser fixiert und der Stator 9 des elektrischen Antriebsmotors 1 ist ortsfest mit dem Statorgehäuse 10 gekoppelt und in diesem fixiert. Das Statorgehäuse 10 verbindet dabei eine Kupplungsglocke 11 im Sinne eines Zwischengehäuses, welche eine nicht gezeigte Kupplung zur Herstellung der Wirkverbindung der Welle 2 mit dem Verbrennungsmotor umschließt, mit dem Getriebegehäuse 6, in welchem das von der Vorrichtung auf die Vorgelegewelle 3 übertragene Antriebsdrehmoment übersetzt wird.

Zur Übertragung des Antriebsdrehmoments des elektrischen Antriebsmotors 1 und/oder des zweiten Antriebsmotors von der Welle 2 auf die Vorgelegewelle 3 im Sinne eines Bauteils des Antriebsstrangs ist das abtriebsseitige Ende der Welle 2 als Zahnrad 12 ausgebildet, welches mit einem drehfest auf der Vorgelegewelle 3 angeordneten Zahnrad 13 im Eingriff steht. Bei der Drehmomentübertragung wird hierdurch eine senkrecht zur Längsrichtung der Welle 2 wirkende Querkraft in die Welle 2 eingeleitet, welche eine Biegung der Welle 2 hervorruft, deren Verlauf in Längsrichtung der Welle 2 durch die Biegelinie 14 dargestellt wird. Die Biegelinie 14 kann hierbei in bekannter Weise aus dem Krafteinleitungspunkt oder -bereich der Querkraft, aus den Orten und den Arten der Lagerungen 4, 5, sowie aus der Geometrie der Welle 2 ermittelt werden. Die Übertragung des Antriebsdrehmoments auf die Vorgelegewelle 3, beziehungsweise auf die Bauteile des Antriebsstrangs, kann dabei auch beispielsweise über eine Ketten- oder Riementransmission erfolgen. Ebenso kann das Hauptgetriebe mehrere Vorgelegewellen umfassen, auf welche das Antriebsdrehmoment übertragen wird, und die Welle 2 kann mehrere Zahnräder aufweisen, die das Antriebsdrehmoment auf eine oder mehrere Vorgelegewellen des Hauptgetriebes übertragen. Dabei sind die Zahnräder vorzugsweise zwischen der ersten und der zweiten Lagerung 4, 5 auf der Welle 2 angeordnet und die Welle ausschließlich gegen das Getriebegehäuse 6 abgestützt. Das Zahnrad 12 beziehungsweise die auf der Welle 2 angeordneten Zahnräder können hierbei auch durch eine Kupplung lösbar mit der Welle 2 verbindbar sein, beispielsweise um das Schalten zwischen Übersetzungstufen des Hauptgetriebes zu ermöglichen.

Der Rotor 7 des elektrischen Antriebsmotors 1 ist erfindungsgemäß in der Weise auf der Welle 2 angeordnet, dass sich die Auflagefläche 8 des Rotors 7 im Bereich des Maximums 15 der Biegung, das heißt im Bereich des mit dem Pfeil markierten Maximums der Biegelinie 14, befindet. Um dabei die Verkippung des Rotors 7 gegenüber dem Stator 9 zu minimieren, ist die in Längsrichtung der Welle 2 befindliche Mitte der Auflagefläche 8 genau auf dem Maximum 15 angeordnet. Der Luftspalt 16 zwischen dem Rotor 7 und dem Stator 9 ist dabei so bemessen, dass es bei einer Biegung der Welle 2 und der dabei erfolgenden Lageverschiebung des Rotors 7 gegenüber dem Stator 9 zu keiner Kollision der beiden Bauteile 7, 9 kommen kann.

Der elektrische Antriebsmotor 1 ist in der dargestellten Ausgestaltung eine permanenterregte Synchronmaschine in Innenläuferbauweise, wobei dessen Rotor 9 aus einem Rotorträger 17 und mindestens einem auf dem Rotorträger 17 befestigten Blechpaket 18 besteht. Insbesondere zur Verbesserung der Laufruhe und zur Verhinderung von Drehmomentstößen beim Aktivieren des elektrischen Antriebsmotors 1 kann der Rotorträger 17 auch aus zwei oder mehr Bauteilen bestehen, welche vorzugsweise über Torsionsdämpfer oder Torsionsfedern miteinander gekoppelt sind. Der elektrische Antriebsmotor 1 kann selbstverständlich auch beliebig anderer Bauart sein, beispielsweise kann er ein Außenläufermotor oder ein Scheibenläufermotor sein, und er kann auf Grundlage eines anderen Prinzips arbeiten, beispielsweise auf Grundlage des Asynchronprinzips oder des Reluktanzprinzips.

Der elektrische Antriebsmotor 1 dient vorzugsweise sowohl als Antrieb, indem er elektrische Energie in ein Antriebsdrehmoment der Welle 2 beziehungsweise in mechanische Antriebsenergie der Welle 2 umwandelt, als auch als Generator, indem er mechanische Energie von der der Welle 2 abgreift und in elektrische Energie umwandelt. Die zum Antrieb benötigte elektrische Energie wird dabei bevorzugt einem Energiespeicher, beispielsweise einem Akkumulator, entnommen, kann jedoch auch im Sinne eines seriellen Hybridantriebs durch einen mit dem zweiten Antriebsmotor gekoppelten Generator bereitgestellt werden, welcher die mechanische Antriebsenergie des zweiten Antriebsmotors in für den elektrischen Antriebsmotor 1 nutzbare elektrische Antriebsenergie umwandelt.

Vorzugsweise befindet sich die Vorrichtung zwischen einer Anfahrkupplung, über welche die Wirkverbindung zu dem zweiten Antriebsmotor herstellbar ist und einem Hauptgetriebe eines Fahrzeugs, wobei die Vorrichtung bei Betätigung der Anfahrkupplung im Schließsinne mit dem zweiten Antriebsmotor einen parallelen Hybridantrieb bildet. Dabei überträgt die Vorrichtung sowohl das durch den zweiten Antriebsmotor erzeugte Antriebsdrehmoment, als auch das von dem elektrischen Antriebsmotor erzeugte Antriebsdrehmoment auf die Bauteile des Antriebsstrangs.

Die Vorrichtung kann auch zwischen zwei Kupplungen angeordnet sein und einem Hauptgetriebe vorgeschaltet sein, wobei die erste Kupplung dann die Welle 2 mit dem zweiten Antriebsmotor lösbar verbinden kann und die zweite Kupplung die Welle 2 mit dem Hauptgetriebe lösbar verbinden kann.

Selbstverständlich kann die Vorrichtung auch dem Hauptgetriebe nachgeschaltet sein, wobei die Welle 2 beispielsweise antriebsseitig mit einer Ausgangswelle des Hauptgetriebes verbunden ist und abtriebsseitig mit einem Verteilergetriebe oder einem Differentialgetriebe des Fahrzeugs verbunden ist. Sie kann daher auch im Sinne eines Radnabenmotors eingesetzt werden, wozu die Welle 2 vorzugsweise antriebsseitig mit einem Differentialgetriebe des Fahrzeugs verbunden ist und abtriebsseitig mit einer Radnabe.

Falls die Biegung der Welle 2, beispielsweise durch eine entsprechende Formgebung der Welle 2 oder durch eine Abstützung mit mehr als zwei Lagerungen, mehrere Maxima aufweist, ist der Rotor 7 vorzugsweise auf dem Maximum angeordnet, welches die geringste Amplitude aufweist, das heißt, welches die geringste Änderung der Lage des Rotors 7 gegenüber dem Stator 9 hervorruft. Hierdurch kann der Luftspalt 16 zwischen dem Rotor 7 und dem Stator 9 sehr klein ausgeführt werden, was die magnetische Flussdichte zwischen diesen beiden Bauteilen 7, 9 beim Betrieb des elektrischen Antriebsmotors 1 erhöht und somit das durch ihn erzeugbare Antriebsdrehmoment steigert.

### Bezugszeichen

- 1: elektrischer Antriebsmotor
- 2: Welle
- 3: Vorgelegewelle
- 4: erste Lagerung
- 5: zweite Lagerung
- 6: Getriebegehäuse
- 7: Rotor
- 8: Auflagefläche
- 9: Stator
- 10: Statorgehäuse
- 11: Kupplungsglocke
- 12: Zahnrad
- 13: Zahnrad
- 14: Biegelinie
- 15: Maximum der Biegung der Welle 2
- 16: Luftspalt
- 17: Rotorträger
- 18: Blechpaket

## Patentansprüche

1. Vorrichtung für einen Fahrzeugantriebsstrang zur Erzeugung und Übertragung eines Antriebsdrehmoments auf Bauteile (3, 13) des Antriebsstrangs,
- mit einer ein- oder mehrteiligen Welle (2), welche mit einer Abtriebsseite mit den Bauteilen (3, 13) des Antriebsstrangs in Wirkverbindung steht,
- mit mindestens einer ersten und einer zweiten Lagerung (4, 5), welche die Welle (2) drehbar abstützen und
- mit einem elektrischen Antriebsmotor (1) zur Erzeugung zumindest eines Teils des übertragenen Antriebsdrehmoments, der aus mindestens einem ortsfesten Stator (9) und einem drehfest mit der Welle (2) verbundenen Rotor (7) besteht, wobei der Rotor (7) mit mindestens einer Auflagefläche (8) an der Welle (2) anliegt,
**dadurch gekennzeichnet, dass** die Vorrichtung an der Welle (2) angeordnete Mittel (12) umfasst, durch welche das Antriebsdrehmoments unter Einleitung mindestens einer Querkraft in die Welle (2) auf die Bauteile (3, 13) des Antriebsstrangs übertragbar ist, wobei der Rotor (7) des Antriebsmotors (1) derart auf der Welle (2) positioniert ist, dass sich die Auflagefläche (8) im Bereich eines Maximums (15) einer durch die Querkraft in der Welle (2) hervorgerufenen Biegung befindet.

2. Vorrichtung nach Anspruch 1, **dadurch gekennzeichnet, dass** der Rotor (7) derart auf der Welle (2) positioniert ist, dass sich das Maximum (15) der Biegung auf halber Länge einer Ausdehnung der Auflagefläche (8) in Längsrichtung der Welle (2) befindet.

3. Vorrichtung nach Anspruch 1, **dadurch gekennzeichnet, dass** die Mittel (12) im Bereich eines Endes der Welle (2) angeordnet sind und mindestens ein auf der Welle (2) angeordnetes Zahnrad (12) umfassen, welches mit der Welle (2) verbunden ist oder lösbar verbindbar ist und dass die erste Lagerung (4) an einem anderen Ende der Welle (2) angeordnet ist, wobei die zweite Lagerung (5) zwischen den Mitteln und der ersten Lagerung (4) angeordnet ist.

4. Vorrichtung nach Anspruch 1, **dadurch gekennzeichnet, dass** die Welle (2) über die erste Lagerung (4) gegen eine Motorausgangswelle eines zweiten Antriebsmotors drehbar abgestützt ist und über die zweite Lagerung (5) gegen ein Getriebegehäuse (6) drehbar abgestützt ist, wobei die Motorausgangswelle über eine Kupplung mit der Welle (2) lösbar verbindbar ist.

5. Vorrichtung nach Anspruch 1, **dadurch gekennzeichnet, dass** die Vorrichtung eine dritte Lagerung aufweist, welche die Welle (2) gegen eine Motorausgangswelle eines zweiten Antriebsmotors drehbar abstützt und dass die erste Lagerung (4) die Welle (2) gegen ein Zwischengehäuse (11) drehbar abstützt und dass die zweite Lagerung (5) die Welle (2) gegen ein Getriebegehäuse (6) drehbar abstützt, wobei die Motorausgangswelle über eine Kupplung mit der Welle (2) lösbar verbindbar ist.

6. Vorrichtung nach Anspruch 1, **dadurch gekennzeichnet, dass** der Stator (9) ortsfest mit einem Statorgehäuse (10) gekoppelt ist, welches zwischen einem Zwischengehäuse (11) und einem Getriebegehäuse (6) angeordnet ist.

## Claims

1. Device for a vehicle drivetrain for generating and transmitting a drive torque to components (3, 13) of the drivetrain,
- having a single- or multi-part shaft (2) which is operatively connected at a drive output side to the components (3, 13) of the drivetrain,
- having at least one first and one second bearing arrangement (4, 5) which rotatably support the shaft (2), and
- having an electric drive motor (1) for generating at least a part of the transmitted drive torque, said electric drive motor being composed of at least a positionally fixed stator (9) and a rotor (7) which is connected to the shaft (2) for conjoint rotation therewith, wherein the rotor (7) bears with at least one support surface (8) against the shaft (2),
**characterized in that** the device comprises means (12) which are arranged on the shaft (2) and via which the drive torque can be transmitted, with the introduction of at least one transverse force into the shaft (2), to the components (3, 13) of the drivetrain, wherein the rotor (7) of the drive motor (1) is positioned on the shaft (2) such that the support surface (8) is situated in the region of a maximum (15) of a bend caused in the shaft (2) by the transverse force.

2. Device according to Claim 1, **characterized in that** the rotor (7) is positioned on the shaft (2) such that the maximum (15) of the bend is situated halfway along the length of an extent of the support surface (8) in the longitudinal direction of the shaft (2).

3. Device according to Claim 1, **characterized in that** the means (12) are arranged in the region of an end of the shaft (2) and comprise at least one toothed wheel (12) which is arranged on the shaft (2) and which is connected or detachably connectable to the shaft (2), and **in that** the first bearing arrangement (4) is arranged at another end of the shaft (2), wherein the second bearing arrangement (5) is arranged between the means and the first bearing arrangement (4).

4. Device according to Claim 1, **characterized in that** the shaft (2) is rotatably supported via the first bearing arrangement (4) against a motor output shaft of a second drive motor and is rotatably supported via the second bearing arrangement (5) against a gearbox housing (6), wherein the motor output shaft can be detachably connected to the shaft (2) via a clutch.

5. Device according to Claim 1, **characterized in that** the device has a third bearing arrangement which rotatably supports the shaft (2) against a motor output shaft of a second drive motor, and **in that** the first bearing arrangement (4) rotatably supports the shaft (2) against an intermediate housing (11), and **in that** the second bearing arrangement (5) rotatably supports the shaft (2) against a gearbox housing (6), wherein the motor output shaft can be detachably connected to the shaft (2) via a clutch.

6. Device according to Claim 1, **characterized in that** the stator (9) is coupled in a positionally fixed manner to a stator housing (10) which is arranged between an intermediate housing (11) and a gearbox housing (6).

## Revendications

1. Dispositif pour une chaîne cinématique d'un véhicule pour produire et transmettre un couple d'entraînement à des composants (3, 13) de la chaîne cinématique, comprenant
- un arbre en une ou plusieurs parties (2), qui est en liaison fonctionnelle par un côté de sortie avec les composants (3, 13) de la chaîne cinématique,
- au moins un premier et un deuxième palier (4, 5) qui supportent l'arbre (2) en rotation et
- un moteur d'entraînement électrique (1) pour produire au moins une partie du couple d'entraînement transmis, qui se compose d'au moins un stator fixe (9) et d'un rotor (7) connecté de manière solidaire en rotation à l'arbre (2), le rotor (7) s'appliquant avec au moins une surface d'appui (8) sur l'arbre (2),
**caractérisé en ce que** le dispositif comprend des moyens (12) disposés sur l'arbre, par le biais desquels le couple d'entraînement peut être transmis aux composants (3, 13) de la chaîne cinématique en introduisant au moins une force transversale dans l'arbre (2), le rotor (7) du moteur d'entraînement (1) étant positionné sur l'arbre (2) de telle sorte que la surface d'appui (8) se trouve dans la région d'un maximum (15) d'une flexion provoquée dans l'arbre (2) par la force transversale.

2. Dispositif selon la revendication 1, **caractérisé en ce que** le rotor (7) est positionné sur l'arbre (2) de telle sorte que le maximum (15) de la flexion se trouve à mi-longueur d'une étendue de la surface d'appui (8) dans la direction longitudinale de l'arbre (2).

3. Dispositif selon la revendication 1, **caractérisé en ce que** les moyens (12) sont disposés dans la région d'une extrémité de l'arbre (2) et comprennent au moins une roue dentée (12) disposée sur l'arbre (2), laquelle est connectée à l'arbre (2) ou peut lui être connectée de manière amovible, et **en ce que** le premier palier (4) est disposé sur une autre extrémité de l'arbre (2), le deuxième palier (5) étant disposé entre les moyens et le premier palier (4).

4. Dispositif selon la revendication 1, **caractérisé en ce que** l'arbre (2) est supporté à rotation par le biais du premier palier (4) contre un arbre de sortie du moteur d'un deuxième moteur d'entraînement, et est supporté à rotation par le biais du deuxième palier (5) contre un boîtier de transmission (6), l'arbre de sortie de moteur pouvant être connecté de manière amovible à l'arbre (2) par le biais d'un embrayage.

5. Dispositif selon la revendication 1, **caractérisé en ce que** le dispositif présente un troisième palier qui supporte à rotation l'arbre (2) contre un arbre de sortie de moteur d'un deuxième moteur d'entraînement et **en ce que** le premier palier (4) supporte à rotation l'arbre (2) contre un boîtier intermédiaire (11) et **en ce que** le deuxième palier (5) supporte à rotation l'arbre (2) contre un boîtier de transmission (6), l'arbre de sortie du moteur pouvant être connecté de manière amovible à l'arbre (2) par le biais d'un embrayage.

6. Dispositif selon la revendication 1, **caractérisé en ce que** le stator (9) est accouplé fixement à un boîtier de stator (10) qui est disposé entre un boîtier intermédiaire (11) et un boîtier de transmission (6).
